# EUROPEAN PATENT APPLICATION

(11) **EP 4 517 625 A1**
(43) Date of publication of application: **05.03.2025**
(21) Application number: 24197670.3
(22) Date of filing: 30.08.2024
(51) Int. Cl.: G06Q 10/20, G09B 5/02, G06F 1/16, G06F 3/01, G06T 19/00, G06V 20/20

(54) **ARRANGEMENT AND METHOD FOR PROVIDING TECHNICAL SUPPORT BASED ON AUGMENTED AND/OR MIXED REALITY INTERFACE**

(30) Priority: 30.08.2023 BE 202305719
(71) Applicant: SpectralBot BV, 8200 Brugge (BE)
(72) Inventor: OSTYN, Claude, 8310 Brugge (BE); SEGERS, Nathan, 9320 Erembodegem (BE); VAN ISEGHEM, Thomas, 9170 Sint-Gillis-Waas (BE)
(74) Representative: Winger

(57) **Abstract**

A mobile device, an arrangement and corresponding method are disclosed to be used for delivering technical support, in particular for troubleshooting or problem solving operations. The technical support regards to electronic devices grouped as a system. The mobile device is enabled to scan a marker associated with the system being determined by the electronic devices. Connection to a data storage and with the electronic devices is also enabled. The arrangement comprises the mobile device and electronic devices determining the system. The mobile device is configured for displaying an augmented and/or mixed reality (AR/MR) interface for showing information about the system and its electronic devices, of which one or more may be present in the camera view of the mobile device.

## Description

### Technical field

The present invention relates to the field of troubleshooting of networks of operationally interconnected electronic devices, for instance, but not limited thereto, professional audio-visual (AV), lighting and network equipment. The invention relates to devices and methods to be used for delivering support, for instance technical support, and/or assistance on operationally interconnected electronic devices, in particular for troubleshooting and/or problem solving operations. More specifically, the invention relates to a mobile device, an arrangement comprising such mobile device, and the use thereof e.g. in a physical environment comprising one or more of the electronic devices.

### Background of the invention

Providing help or technical support to operators or technicians experiencing troubleshooting issues with electronic equipment on site should go easily and as fast as possible. Consider for example the application field of professional audio-visual (AV), lighting and network equipment, such as used in staging. People on site, e.g. roadies during concerts or other kind of entertainment events, are often not the technically skilled ones that originally set up installations. Therefore, in case they get stuck with the equipment provided, tools for a swift resolution should be delivered, such that literally the show can go on. And this, on time, and every time.

In case of a problem with equipment, there are currently two common ways to go about this. Either call someone for help, or else try to solve it by using the manufacturer's tools at hand (e.g. software application, the LCD on the apparatus, consulting the manual, etc.). This works, if the technician knows what he/she is doing (e.g. knows the software, know-how to read the LCD, etc.) and as long as the equipment is not too complex. This is, however, far less convenient if the person on site is not so technically skilled, or when the equipment is part of a larger system, e.g. a chain or network of devices, and it is difficult to pinpoint which one of the system devices has a problem. It becomes much more difficult to find the issue, especially for unskilled people.

Recent techniques to provide support are based on augmented reality technology, and they are becoming more important than ever. Solutions exist in the art, however, particularly focusing on a particular device and/or piece of equipment, and hence not really considering an entire system (or system as a whole) comprising a large amount and extended variety of devices. Moreover, an appropriate solution for the AV world is lacking.

### Aim of the invention

The aim of the invention is to lower the threshold for troubleshooting and/or problem solving regarding equipment failures and related issues, and to moreover facilitate technically unskilled or less skilled people to try and solve issues with equipment, even if it is complex.

### Summary of the invention

In a first aspect of the invention, a mobile device is provided for aiding in delivering technical support on a system determined by a plurality of electronic devices. In particular, the technical support is related to troubleshooting and/or problem solving operations. The electronic devices are for example devices in the field of professional audio-visual (AV), lighting, network and power equipment. However, the present invention is not limited thereto, and may be used in other environments where a plurality of electronic devices are operationally interconnected. According to an embodiment, the electronic devices are operationally interconnected within the system. Operational interconnection means that the electronic devices are somehow connected to one another, wired or wireslessly, for instance for communication. Operational interconnection goes beyond pure mechanical interconnection.

The mobile device according to embodiments of the first aspect of the present invention comprises a camera, a display and a processor. With the camera, the mobile device is able to scan a marker associated with the system defined by the plurality of electronic devices. Whereas the camera of the mobile device is suitable for scanning the marker, the display can be suitable for showing the marker during scanning thereof. The processor is connectable to a memory storing characteristics of the system (being determined by a plurality of electronic devices) and can retrieve characteristics of the system therefrom. This memory is for example local (cached) memory of the mobile device, but it can also be external such as e.g. memory of a server, or memory in the cloud (for instance storage facility on a cloud server). Moreover, the processor is also connectable to the plurality of electronic devices. The mobile device is configured for displaying (via the display) an augmented and/or mixed reality (AR/MR) interface corresponding to one or more of the plurality of electronic devices of the system, along with information of the system and/or one or more of the plurality of electronic devices defined therein, based on the stored and retrieved characteristics, and/or obtained from the connectable plurality of electronic devices.

The AR/MR interface to be displayed corresponds to one or more of the plurality of electronic devices, and shall be accessible whenever the one or more of the plurality of electronic devices is displayed on the display of the mobile device. In order to obtain that one or more of the plurality of electronic devices is being displayed, the camera of the mobile device can be moved and/or directed in the direction of this one or more of the plurality of electronic devices of the system. In other words, according to an embodiment, the AR/MR interface is accessible for one or more of the plurality of electronic devices of the system, whenever such one or more of the plurality of electronic devices is displayed on the display of the mobile device, which implies that the user (of the mobile device) is directing the camera of the mobile device in the direction of the one or more of the plurality of electronic devices, and hence this one or more of the plurality of electronic devices is/are on camera view of the mobile device. By definition, augmented reality (AR) means that information is displayed in overlay with the real world. In other words, with AR is meant that only information (e.g. real world image overlaid with extra information) is given to the user of the mobile device, whereas in case of mixed reality (MR), an interaction with the user can also take place. Hence, with MR, it is understood that information is displayed in overlay with the real world, and, in addition, the user can interact with it, e.g. press a button, or move a window around shown in the camera view, e.g. 3D space camera view, of for example the mobile device onto which the AR/MR interface is applied. Also, in AR or MR, the overlay (information with possible interaction) can be anchored to the camera view, or even to a physical object shown. Further, in MR, for example, the interface showing information, may also show buttons that can be tapped or selected, and e.g. in return of tapping or selecting a button, a reaction occurs for instance by means of deactivating one of the devices in the system.

According to an embodiment, the processor of the mobile device is configured for generating the AR/MR interface to be displayed. Alternatively, it is also possible that the AR/MR interface is not generated by the mobile device itself (or its processor). In this case, the mobile device may comprise an input port which is adapted for receiving the AR/MR interface from an external location where it is generated.

The information shown with the AR/MR interface comprises for example specifications, technical data (e.g. retrieved from a memory location such as for instance the memory of a cloud server), status and/or health data (e.g. obtained from an electronic device) of one or more of the plurality of electronic devices.

The layout of the AR/MR interface may be (partially) adaptable, which means that in particular part or all of the information being displayed can be moved around on the display of the mobile device.

The mobile device is for use in a physical environment. The physical environment is to be interpreted as an environment at a physical location, and may be open or closed. The physical environment may for example be a room in a building, the interior of a van, but also a yard outside a house. The mobile device has a camera which, in use, shows a current scene from the camera's viewpoint. It is possible that all of the plurality of electronic devices of the system are present sufficiently close to the mobile device so as to be in the camera view. However, it can also be that one or more of the plurality of electronic devices are located outside of the camera view. For example, in case the mobile device, and hence its camera, is used in a room in a building, some or all of the plurality of electronic devices making up the system can be present in the room, and hence can potentially - depending on the camera orientation - be present in the camera view. One or more, possibly all, of the plurality of electronic devices, however, can be present out of the reach of the camera view, for instance in another room in the same building, or a space outside the building (e.g. perhaps in another building, or maybe in the open air). It is also possible that one or more of the plurality of electronic devices that are not within the reach of the camera view, are spread over different locations. A user of the mobile device can virtually add an electronic device in the camera view such that its corresponding AR/MR interface is accessible and can be viewed, although this electronic device is physically not present in the camera view.

The mobile device may for instance be a mobile phone, a tablet or a laptop. In embodiments of the present invention, the mobile device may be a wearable device, such as for instance smart glasses.

In a second aspect of the invention, an arrangement is provided for delivering support, e.g. technical support, e.g. to a user experiencing problems with electronic devices, for example - the invention not being limited thereto - in the field of professional audio-visual (AV), lighting, network and power equipment.. The arrangement comprises a system defined by a plurality of electronic devices being operationally interconnected and determining a configuration of the system. The arrangement further comprises a mobile device in accordance with embodiments of the first aspect. The mobile device comprises a camera, for scanning a marker associated with the system, a display, and a processor, connectable to a memory storing characteristics of the system and able to retrieve characteristics of the system from the memory, and connectable to the plurality of electronic devices. The mobile device is configured for displaying an augmented and/or mixed reality (AR/MR) interface corresponding to one or more of the plurality of electronic devices of the system, along with information of the system and/or one or more of the plurality of electronic devices, based on said stored and retrieved characteristics and/or obtained from the connectable plurality of electronic devices. The mobile device having a camera, in use, shows a current scene from the camera's viewpoint. In other words, the camera has a camera view. The arrangement also comprises a marker, acting as a unique digital system identifier for identifying the system. According to an embodiment, a physical position of the marker is used to localize the plurality of electronic devices of the system, herewith defining the marker as primary anchor. Each of the plurality of electronic devices has a relative position (also called device anchor) in view of the physical position of the marker, i.e. primary anchor being defined by an absolute position. The marker may be provided onto a rack, case, plate or wall, or the marker may be provided onto a separate card or token. The marker is a QR-code, NFC or RFID tag or asset tag. According to an embodiment, the memory is either part of the mobile device or a separate device or a separate system of the arrangement, possibly connected to the cloud. It is not excluded from the invention that the memory could also be part of the system, although this seems rather uncommon.

The marker may be provided at a position such that, in use of the arrangement, and thus in use of the mobile device thereof, the marker is within the reach of the camera view. According to an embodiment, at least one of the plurality of electronic devices is not located in the camera view. The system of the arrangement may be redefined by adding one or more additional electronic devices, and/or removing one or more of the plurality of electronic devices, and/or ((semi-)automatic) adapting settings of one or more of the plurality of electronic devices (by the processor, which is (wireless) connectable to one or more of the plurality of electronic devices), and herewith new characteristics of the system can be defined. Such new characteristics of the system may be stored in the memory. According to an embodiment, the mobile device is configured for displaying specifications, technical data, status and/or health data of one or more of the plurality of electronic devices. According to an embodiment, the processor is adapted for triggering displaying, on the display, of the AR/MR interface for one or more of the plurality of electronic devices of the system, whenever said one or more of the plurality of electronic devices is displayed on the display of the mobile device. The layout of the AR/MR interface may be adaptable, in particular corresponding information being displayed can be moved around on the display of the mobile device.

The arrangement may further comprise means for requesting remote support and/or assistance, possibly of an expert, possibly a technical expert. According to an embodiment, such means are part of the mobile device. According to alternative embodiments, the means for requesting remote support and/or assistance, possibly of an expert, may be part of another computing device at least connectable to the mobile device, such that the other computing device is able to share the camera view of the mobile device including the AR/MR interface applied thereon, possibly with the expert (e.g. via the cloud or internet). In embodiments, the marker may be provided for example onto a rack or case onto which at least one of the electronic devices making up the system is installed, or on a plate or wall associated with the system. With "associated with" is meant that there is some relationship between the plate or wall and the system. The marker may for instance be applied to a wall or door of a server room, either at the inside or at the outside of this room. Or the marker may be applied on a plate close to the location where at least one of the electronic devices of the system is present. In embodiments, the marker can be a QR-code, NFC tag or asset tag. According to an embodiment, the position of the marker is used as reference, alternatively called an anchor, to localize the plurality of electronic devices of the system. According to an embodiment, at least one of the plurality of electronic devices is mounted onto a rack, onto which the marker is provided. According to an embodiment, at least one of the plurality of electronic devices is not located within reach of the camera view of the mobile device, but is provided at an external location. The system in the camera view can be redefined by adding one or more additional electronic devices, and/or removing one or more of the plurality of electronic devices. Moreover, according to an embodiment, the settings of one or more of the plurality of electronic devices can be adapted for the system. New characteristics of the system can herewith be defined. The new characteristics of the system, for example the redefined system, of electronic devices belonging together or functioning as a whole can be stored in a memory, e.g. local in the mobile device, or external to the arrangement such as in the cloud e.g. on a cloud server.

In a third aspect of the invention, use of an arrangement in accordance with embodiments of the second aspect is provided, for providing support, e.g. technical support, in particular for instance for troubleshooting and/or problem solving operations, related to one or more of the plurality of electronic devices, and/or the interconnection or interoperability between the plurality of electronic devices.

In a fourth aspect of the invention, a method is provided for delivering support, e.g. technical support, (e.g. to a user experiencing problems with electronic devices in an interconnected system), in particular for troubleshooting and/or problem solving operations. The method comprises the steps of
(i) providing a mobile device comprising a camera, a display and a processor connected to a memory storing characteristics of a system for which a troubleshooting process is required, the system being defined by a plurality of electronic devices, and connected to the plurality of electronic devices, being operationally interconnected and determining a configuration of the system,
(ii) providing a marker associated with the system for which the troubleshooting process is required, wherein the marker is acting as a unique digital system identifier for identifying the system,
(iii) scanning the marker with the camera of the mobile device,
(iv) based on a signal generated by scanning the marker retrieving characteristics of the system and/or one or more of the plurality of electronic devices from a memory (e.g. local in the mobile device, or external to the arrangement such as in the cloud e.g. on a cloud server); such signal is typically related to the unique identification of the system,
(v) based on said retrieved information, generating an augmented and/or mixed reality (AR/MR) interface corresponding to the system, and
(vi) when directing and/or moving the camera of the mobile device towards one or more of the plurality of electronic devices of the system, such that they are within reach of the camera view, displaying on the display of the mobile device an image of the one or more of the plurality of electronic devices of the system, and part of the AR/MR interface, corresponding to said one or more of the plurality of electronic devices. The method may further comprise the step of (vii) requesting remote support and/or assistance, possibly of an expert. The method may also include virtually adding on the display of the camera information of an electronic device that is part of the system but falls outside the reach of the camera view. The method may further comprise the step of redefining the system by adding one or more additional electronic devices, and/or removing one or more of the plurality of electronic devices, and/or adapting settings of one or more of the plurality of electronic devices, and herewith new characteristics of the system are defined, which are for example stored in the memory.

The invention further pertains to methods for, prior to execution of the method for support in accordance with the fourth aspect of the invention, ((semi-)automatically) generating the necessary (graphics) elements enabling the displaying an augmented and/or mixed reality (AR/MR) interface when required during the execution of said method for support, wherein in particular said augmented and/or mixed reality (AR/MR) interface is build up in real-time.

The invention further pertains to methods for, prior to execution of the method for support in accordance with the fourth aspect of the invention, ((semi-)automatically) generating (fixed) characteristics (information such as serial numbers) of one or more electronic devices and/or system, storing those in an appropriate memory location and labelling for retrieval when required during the execution of said method for support.

The invention further pertains to methods for, prior to execution of the method for support in accordance with the fourth aspect of the invention, ((semi-)automatically) generating the decision flows in computer readable formats, to be executed by the processor (alone or together with other compute elements in the deployed arrangement), storing those in an appropriate memory location and labelling for retrieval when required during the execution of said method for support, wherein in particular those decision flows are adapted for taking into account run-time information (status information) from said electronic devices.

The invention further pertains to methods for, prior to execution of the method for support in accordance with the fourth aspect of the invention, ((semi-)automatically) generating settings (controls) for said electronic devices (and hence readable by those), storing those in an appropriate memory location and labelling for retrieval when required during the execution of said method for support. In an exemplary embodiment said settings may invoke a restarting of the electronic device (e.g. one or more of said electronic devices) to thereto return to its initialization settings. It is noted that these ((semi-)automatically) generating settings (controls) can be supplemented by settings set via the augmented and/or mixed reality (AR/MR) interface.

It is noted that with automatically generating is meant that the generation is occurring in an automatic way. With semi-automatically is meant that a user interaction may still be needed, and thus remains possible. For example a user has to input or select certain parameters (or information in general), in particular when using the interface.

### Brief description of the drawings

FIG. 1 illustrates an arrangement comprising a mobile device with technical support app and a plurality of electronic devices associated with a marker, at least the marker being present within the reach of the camera view, to be scanned by the mobile device, in accordance with embodiments of the invention.
FIG. 2 illustrates an embodiment of a blanking plate with marker for a rack, as can be used in embodiments of the invention.
FIG. 3 illustrates a wall plate with marker for a video system, as can be used in embodiments of the invention.
FIG. 4 illustrates an image of a blanking plate for a system comprising three electronic devices and the AR interface for one of the electronic devices, in accordance with embodiments of the invention. FIG. 4bis illustrates only the AR interface shown in FIG. 4.
FIG. 5 illustrates an embodiment of a wall plate for a system comprising two electronic devices, now showing AR/MR interface for both of the electronic devices, in accordance with embodiments of the invention.
FIG. 6 illustrates a flowchart embodiment of a method for providing technical support, in particular for troubleshooting and/or problem solving operations, comprising steps of set-up and usage, in accordance with embodiments of the invention.
FIG. 7 illustrates another flowchart embodiment of (part of) the method for providing technical support, in accordance with embodiments of the invention.
FIG. 8 illustrates an embodiment of an arrangement comprising a mobile device with technical support app and a plurality of electronic devices defining a system associated with a marker, and enabled to connect with the cloud, in accordance with the invention.
FIG. 9 illustrates a stack of multiple electronic devices and a marker card, in accordance with embodiments of the invention.
FIG. 10 illustrates an embodiment of a system overview, as may be viewed by an AR/MR interface, in accordance with the invention.
FIG. 11 illustrates an embodiment of an arrangement comprising a mobile device with technical support app and a plurality of electronic devices defining a system associated with a marker, within an environment comprising multiple rooms and indicating primary anchor and multiple device anchors, in accordance with the invention.
FIG. 12 illustrates a picture embodiment of an electronic device of a system, overlaid with an AR/MR interface indicating the device anchor, in accordance with the invention.

### Detailed description of the invention

The invention relates to a mobile device, an arrangement, use of this arrangement and method to be used for delivering (technical) support and/or assistance on operationally interconnected electronic devices, in particular for troubleshooting and/or problem solving operations. In particular, the invention relates to an application or, in short, app on a mobile device that uses augmented reality (AR) and/or mixed reality (MR). With the mobile device, a person (further also referred to as a user) experiencing issues in an environment, wherein a plurality of electronic devices are provided on site, opens the app and scans a marker, for instance a QR code, which uniquely identifies the system comprising the plurality of electronic devices the person is looking at. Although currently focused on the use of a QR code as one example of a marker, this principle could easily be implemented with other asset tags like for instance NFC or RFID. The marker, e.g. QR code, is provided in the environment, for example if the environment is a closed room, the QR code can be provided on a wall of the room. Alternatively, the QR code can also be provided onto a plate or rack wherein one or more of the electronic devices are mounted.

According to an embodiment, 19" rack systems are provided for mounting one or more of the electronic devices. Such 19" rack systems are commonly known and used in the AV market. In alternative embodiments of the present invention, non-19" rack systems can be used. In yet alternative embodiments, the devices of the system are not placed in a rack, and even not necessarily in the same room (but are part of the same network).

According to an embodiment, marker plates, e.g. QR code plates (e.g. 19" rack blanking plates, or wall plates) are manufactured and provided with a unique ID, which is pre-defined and stored in memory, e.g. provisioned in the cloud (in general, meaning that a back-up is possible via the cached memory of the mobile device).

The solution provided by the present invention is for example in the form of an arrangement comprising a mobile device with a camera, a display and a processor, and the arrangement comprising further multiple electronic devices defining a system and a marker, associated with the system, which can be scanned by the camera. The processor is connectable to a memory storing characteristics of the system (being determined by the electronic devices) and can retrieve characteristics of the system therefrom. Moreover, the processor is also connectable to the electronic devices. The mobile device is configured for displaying (via the display) an augmented and/or mixed reality (AR/MR) interface corresponding to one or more of the multiple electronic devices of the system, along with information of the system and/or one or more of the multiple electronic devices defined therein. According to an embodiment, the inventive solution is built around a digital identifier, e.g. referred to as Unique Digital System Identifier (UDSI), such digital identifier being for example in the form of a marker such as a QR code.

The principle of the UDSI which can be used in the form of a marker, such as a QR code, is now elaborated first. Herewith, the marker functionality, or in particular the QR code functionality, is further explained including emphasizing on a system (associated to the marker) as a collection of multiple electronic devices, rather than just one device being related therewith or comprised therein.

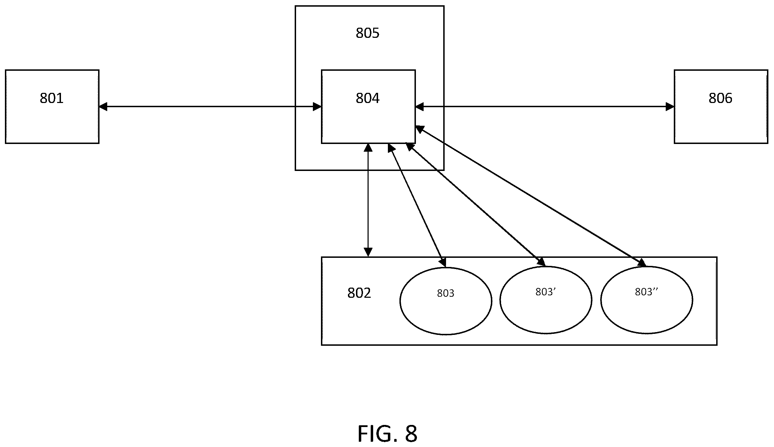

According to an embodiment, as illustrated in FIG. 8, the UDSI or marker 801 is used to identify the system 802, which is for example a collection of installed and interconnected professional audiovisual (AV) devices 803, 803', 803" in a physical room or location. The devices 803, 803', 803" are electronic devices and can be different type of devices. Such identification will support the application or app 804 to recognize the system and thus know which electronic devices 803, 803', 803" are in the system 802 or part thereof, and what the installation is (e.g. meaning which of the devices that are part of the system are installed, how they are installed, and which are not). The marker 801 may be readable by a computing device, such as a mobile device 805, to identify the system 802 of installed devices, before the app 804 even connects to these devices. The app 804 can be installed (to run) on the mobile device 805 comprising a camera, a display and a processor, and is enabled to wirelessly connect to the cloud 806 and/or other devices.

The marker can have many forms, as long as it's digitally readable by a computing device using a scanner, a camera, a radio receiver etc. Examples of technologies allowing for a marker include for example QR codes, barcodes, RFID tags, NFC tokens, but being not limited thereto. QR codes and barcodes, which can be read with a camera or scanner, can be printed and visibly put on display in the room or environment of the installation. QR codes are very commonly used and are easily readable on a mobile device such as a smartphone or tablet. Possibly, QR codes are used as being printed on paper, on stickers or even etched into aluminum plates. RFID and NFC tags can be read with a scanner or smartphone (comprising a scanning application), and may come in many forms like e.g. stickers, fobs, cards. Again, these can be placed in the room or environment of the installation, although RFID and NFC tags are less obviously visible, hence more discrete and therefore perhaps more convenient to use in a public space.

Typically, an AR/MR tool (e.g. mobile device with AR/MR application) itself generates images based on XYZ coordinates in space of the position or location of such tool. According to an embodiment of the invention, an AR anchor can be assigned to each (electronic) device in space. Such AR anchor can be compared for example with a kind of post-it on each (electronic) device. A primary AR anchor point is chosen as a reference when starting the app, e.g. here particularly the position or physical location of the marker.

According to an embodiment, the marker can be interpreted as the main access token for the inventive solution provided including the technical support app:
- it identifies the system, the collection of (professional AV) devices in a room, possibly also placed outside thereof;
- it identifies the installation, the information about how the system and its devices have been installed, serviced, supported and maintained; and
- it identifies its physical location (i.e. of said marker), such that the marker is acting as the primary AR anchor for the AR/MR interface. The primary AR anchor is considered as an absolute position, and is not stored or saved in the cloud, whereas all other positions (e.g. of the multiple devices defining the system) are considered as relative positions, all being saved or stored in the cloud (internal or external to the environment). Their relative positions are referred to or known as other (non-primary) AR anchors.

When the marker is scanned, the technical support app may query the cloud backend for information about the system linked or associated to the marker. This will return information about the system, and its collection of interconnected devices, linked to this marker. If no internet connection is available, the app may try to retrieve the system from its local cache (of the mobile device, onto which the app is installed and running). When scanning the marker such as a QR code with a mobile device, the position of the mobile device could be defined. The position of the mobile device could then be interpreted as a relative position in view of the absolute position of the marker.

It is noted that the devices in the system do not have to be all available on the network. Hence, one, some or all of them can be offline. According to an embodiment, or specific use case, the multiple devices of the system are offline, which is a specific system state that the provided solution, or app in particular, might be able to detect. So, one or more of the multiple devices in the system may be actually there and online, or they may also be offline. The devices may be identified even if they are not online.

Next to a list of devices (with their IP addresses), the system may further contain information about the installation, which can be considered as the more user and business-oriented data set, amongst which you may have for example the following information: customer, name of the installer (system integrator), support email and phone number, log of events and interventions, maintenance records, support tickets etc.

Whenever the marker is scanned, the solution or app may try to connect to the devices in the network, in order to retrieve their status information and hence build an overall status overview of the entire system in the environment (e.g. internal within a room and possibly also external to such room).

If the marker, e.g. QR code, is known, and it has a system of electronic devices linked to it (meaning that characteristics of the system associated with the marker can be retrieved from a memory), the app may gather real-time information from the electronic devices of that system and can show a summary of the equipment's status, overlaying in AR/MR on the camera view of the mobile device (such as a smart phone, or tablet). This means that the user, using the mobile device and the app thereon, can look at the equipment through the camera of the mobile device, while seeing information of the equipment being displayed on top of or around the electronic device shown in the actual camera image, in augmented and/or mixed reality. That interface, may show a summary of the status and health of the equipment in the system. Hence, in one glance, the user can see what is going on with the devices. This can be determined as a first level of the technical support, e.g. troubleshooting or problem solving process.

It is noted that if the marker, e.g. QR code, is not known, or it is not linked to a system yet, the user might be able to create such a system by adding devices to it, linking the system and the devices to the QR code, and storing such system configuration of devices in a memory, e.g. in the cloud (database) for further use (in the future, and by other users as well). This linking of the marker with the system is an initialization step which can be performed either on-site or off-site, and either in real time when setting up the system or in beforehand when preparing the system.

The information about the marker, e.g. QR code, and the system configuration linked to it, could be stored in a memory system, either locally on a physical device, or in the cloud (database). With this information is meant that each marker, e.g. QR code, has a unique identifier, which could be stored in the memory, for instance in the cloud, together with the system information linked to it.

In any case, the information stored in the memory system, if stored remote from the mobile device, can also be cached in the app, hence on the mobile device, in case no cloud connection would be available. Basically, all kinds of information (both system and device information, documentation, AR/MR interface, etc.) except for remote assistance, can be available online (e.g. in the cloud) and offline (e.g. in cached memory of the mobile device).

Apart from the current user, experiencing issues, information may also be available and accessible for one or more other users. Different types of access may be provided, such as for instance:
- a public access for people having a mobile device with a camera, but not configured for displaying an AR/MR interface in accordance with embodiments of the present invention, or thus in other words people for instance not having an application installed for connecting to a platform storing the data;
- a user access, for people having access to that platform, but unauthorized to see the details of the particular system; and
- an authorized user access, for people having access to that platform and authorized to see the details of the particular system, for instance people who want to make use of the equipment and of the app in case they are facing problems.

The marker, together or along with a user's credentials, may be used to authorize the user to access information about the system:
- if the user has no access to the marker at all, the app may refuse to access the system;
- depending on the user's role (e.g. admin, technician, viewer), the user may get more or less features and views; and
- all actions a user performs on the system, may be logged for audit reasons.

This means that each user that has access to a marker, and its system, may have a role assigned to him/her, in order to access the marker and its system.

Further, a marker may be linked to a license on using or accessing the solution or app. Such license may determine who owns the marker, which features are enabled and how much it costs and who pays for it. The license for example determines:
- owner (company, typically, a system integrator);
- billing information, such as license price, billing/invoice address;
- validity, e.g. validity period of the license;
- features (enabled/disabled) such as AR view, remote support;
- credits (amounts or volumes): e.g. max. number of devices in the system, disk space volume.

So, next to the authorization using the user's credentials, the marker can be related to a license assigned to it, determining which features are available for that marker, and for the user, in the solution or app being provided.

Since licenses can be changed or updated to the customer's needs, this implies that a marker does not necessarily need to be replaced if the customer wants extra features, or less or adapted features. The marker may remain the same, and the license and its features may be updated in real-time, and hence these changes can be applicable immediately without the need of changing the marker (or the unique ID, or UDSI).

Once the system is identified, to which the user has been authorized to, and the data has been loaded into the solution or app, the user may get access to information about the system, the devices and the installation. Depending on the user's role, this may include:
- real-time status information:
   ∘ status per device: real-time status of a device using a set of device settings or parameters that are relevant for service and support (e.g. key indicators); and
   ∘ status between devices: real-time status of the connection between devices (e.g. connectivity, activity, signal);
- information and documentation:
   ∘ information per device: access to device specific documentation (e.g. manuals);
   ∘ information between devices: access to configuration documentation of how devices could/should be connected (e.g. drawings and schematics); and
   ∘ information of the installation: access to installation documentation, intervention logs, maintenance logs and reports.

Next to accessing information, the user may - based on its role - also have access to system and device controls, amongst which we may have:
- control per device: real-time control of device settings (e.g. key actions);
- control between devices: real-time control of connected, and interoperable devices (e.g. PoE reset); and
- control of the installation: for example change or adapt installation information, replace or remove/add devices in the system, setup AR anchors, add intervention logs, perform maintenance actions etc.

According to an embodiment, next to the first level or overall view, the user can also tap (with a pointer, or e.g. with his/her finger) on one of the electronic devices shown on the display (camera view) of the mobile device to get more detailed and advanced information about that device. The more detailed and advanced information may be displayed in windows around the image of the electronic device, again in the augmented and/or mixed reality. The user can move those windows around in the AR/MR space visualized on the display of the mobile device. This further information retrieval and adapting layout of the AR/MR visualization can be determined as the second level of the technical support, e.g. troubleshooting and/or problem solving process.

If all that doesn't help finding the issue, according to an embodiment, the user can request remote assistance or support, by inviting a remote person (like a technical expert), into the app's session. This can be referred to as the final level or stage of the technical support, e.g. troubleshooting and/or problem solving process. When requested by the user, an invitation will be sent to such remote person in any suitable way (e.g. email link, txt/sms message), further referred to as the expert here. When the expert accepts the invitation, he/she can join the user's session for example via a web browser, seeing exactly the same on his/her screen as what the user is seeing, i.e. the camera feed of the equipment, overlaid with the extra information in AR. This should help the expert to understand what is going on, quickly. The expert can be enabled to easily make annotations that are visible on the screen of the user, and for instance to point the user to certain (physical) elements in the image (e.g. show which button to press). In particular embodiments of the present invention, audio may be added (for talking & listening to each other), as well as one or more of, for example, a chat function, an annotation function, and a way to share information (files).

Means can furthermore be provided to enable the expert to access more status information of the system and its devices, remotely from the expert's view, for example, even status information that is not visible or accessible for the (on-site) user. This (additional) expert information can also be presented in the AR/MR space (i.e. interface or application) of the expert.

According to an embodiment, at any of the above levels or stages of support during the process, the user will be able to access documentation and information about the devices, the equipment and the installation. This could be the user or instruction manuals (different languages), schematics, installation or production drawings, instruction videos, procedures, etc. These can be provided and uploaded to the memory, for instance in the cloud, by e.g. the manufacturer, the installer, the support company, or anyone with (authorized) access to the data storage.

When adding a new device to a system, it could be possible to use Al-techniques to recognize the physical device, instead of the user inputting what type of device to add.

When adding a new device to a system, network discovery tools may be used to find all devices on the network and propose the right device to the user.

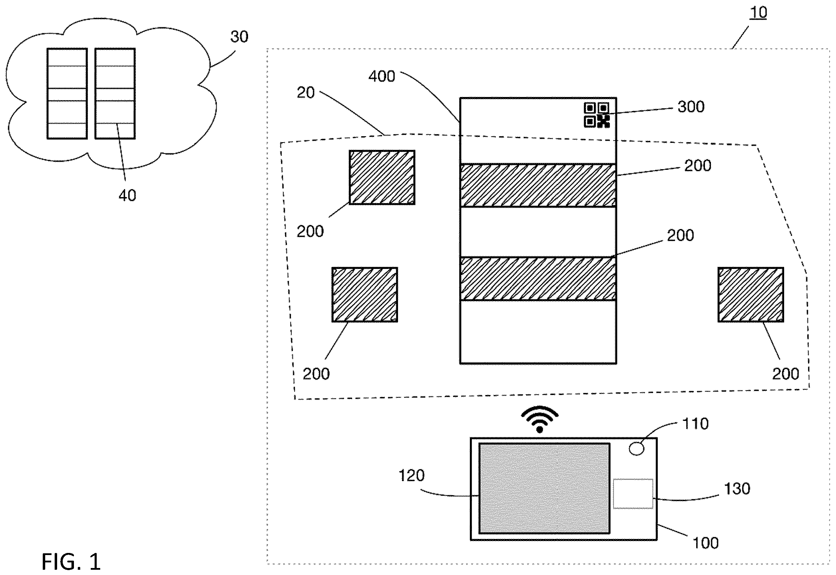

The invention is now further described by means of different embodiments, for which is also referred to FIG. 1 to FIG. 7, and FIG. 9 to FIG. 12.

FIG. 1 illustrates an embodiment of an arrangement comprising a mobile device 100 and a plurality of electronic devices 200 within a physical environment, e.g. a room 10, in accordance with embodiments of the invention. Consider for example the room 10 is in the context or scenery of professional audio-visual (AV), lighting, network and power equipment, and thus the electronic devices 200 are e.g. a projector, LED screen, audio speakers, amplifiers, power distribution, network switches, image/video processing, etc. Here, in particular two of the electronic devices 200, are mounted in a rack 400, onto which a marker 300 is provided, either directly on the rack 400, or else onto a blanking plate (not shown here) provided on the rack 400. Although, here, only two of the plurality of electronic devices 200 are mounted in the rack 400, they are all part of a system 20 to be identified or recognized by scanning the marker 300 by means of the mobile device 100. The marker 300, for example a QR code as depicted here, is associated with the plurality of electronic devices 200 determining the system 20. It is particularly noted that the position of the marker 300, here onto the rack 400, can be used (as reference point, also called anchor) to localize the plurality of electronic devices 200 of the system 20. The mobile device 100 comprises a camera 110, a display 120 and a processor 130, and is enabled to wirelessly connect with other devices, such as the electronic devices 200, and/or with the cloud 30. Onto the mobile device 100, an application or app can be installed, in particular for use in case a person using the electronic devices 200 is experiencing problems, and hence technical support is required. When starting the app for e.g. troubleshooting and/or problem solving operations, the person or user is asked to scan the marker 300, which is enabled by the camera 110 of the mobile device 100. The marker 300, e.g. the QR code, may be shown on the display 120 of the mobile device 100. Via the processor 130, the mobile device 100 is connected to a memory, for instance part of a cloud server 40 (database), and to the plurality of electronic devices 200 making up the system 20. The processor 130 receives the signal obtained from scanning the marker 300 and will submit it to the cloud server 40, able to identify the system 20 by means of the information contained in or with the signal obtained from scanning the marker 300. In the case illustrated, the system 20 is predefined in the cloud server 40 (or database). However, it is possible that the system is a new system, and has to be defined by the current user of the app. In case of such new system, after having done the configuration by determining the electronics devices associated therewith, the new system can be stored in the cloud server 40 (or database). Further, it is possible to remove one of the existing electronic devices 200 from the system 20, or add one or more new ones thereto. In any of these cases, i.e. removal or addition of electronic devices 200, the system 20 will be redefined and restored in the cloud server 40, for further use (including by other users than current user having trouble).

After having identified the system 20 determined by the electronic devices 200, the cloud server 40 will submit back to the processor 130, data related to the characteristics of the system 20. As a result, the mobile device 100 can now generate and display, via the app, an augmented reality (AR) and/or mixed reality (MR) interface corresponding to the system 20 (and its characteristics). Such AR/MR interface is generated for the electronic devices 200 in the system and is visible or is being displayed for each of the electronic devices 200 along with corresponding information thereof or related thereto, in particular at the location of these electronic devices 200 within the camera view of the mobile device. The corresponding information may comprise specifications, technical data (retrieved from the memory, e.g. cloud server 40), status and/or health data of (one of) the electronic devices 200 (retrieved from (one of) the electronic devices 200). The layout of the AR/MR interface can be adaptable (in the app, including e.g. changing settings of the app), in particular the corresponding information being displayed can be moved around on the display 120 of the mobile device 100. The app and in particular the AR/MR interface generated thereby and being provided on the display of the mobile device 100 is intended for technical support and/or assistance, in particular for troubleshooting and/or problem solving operations related to either one or more of the electronic devices 200, and/or else related to the interconnection or interoperability between the electronic devices 200. The app and its AR/MR interface may also provide the option for requesting remote expert assistance, in case the user is still not helped and was not able to fix the problem on his/her own. Having requested remote expert assistance, the visualization of the app and its AR/MR interface including camera view of the mobile device 100, is for example shared with the expert via the cloud 30, enabling the expert to better assist and quickly solve the problem or issues being experienced.

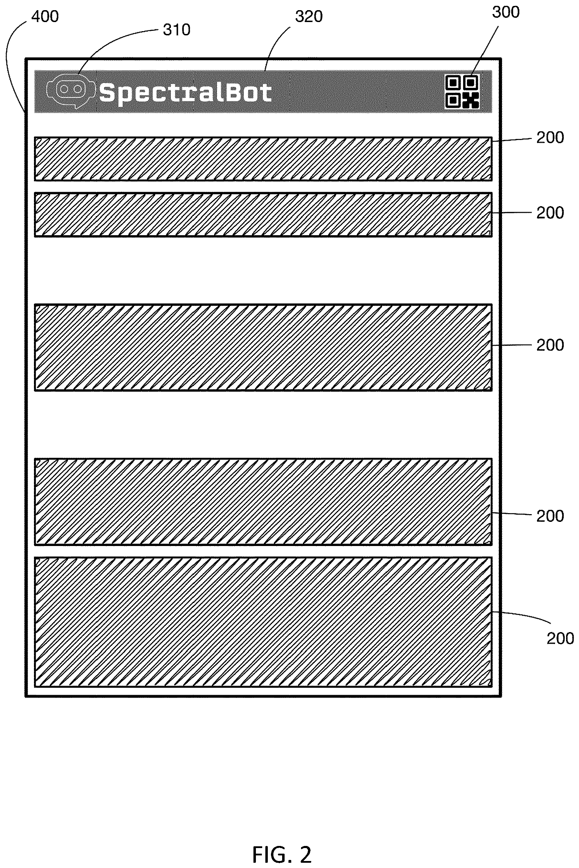

FIG. 2 illustrates an embodiment of a blanking plate 320 with marker 300, here e.g. QR code, for a rack 400, in accordance with embodiments of the invention. The rack 400 comprises a plurality of electronic devices 200. Different types of electronic devices 200 can be mounted in the rack. The blanking plate 320 is here also provided with a logo 310 to indicate the Applicant solution. Adding such logo is of course not a key feature of the invention. The rack may be a 19" rack, which is of common use in the AV technology field. Other types of racks, i.e. non-19" racks, are of course not excluded from the scope of protection of the invention.

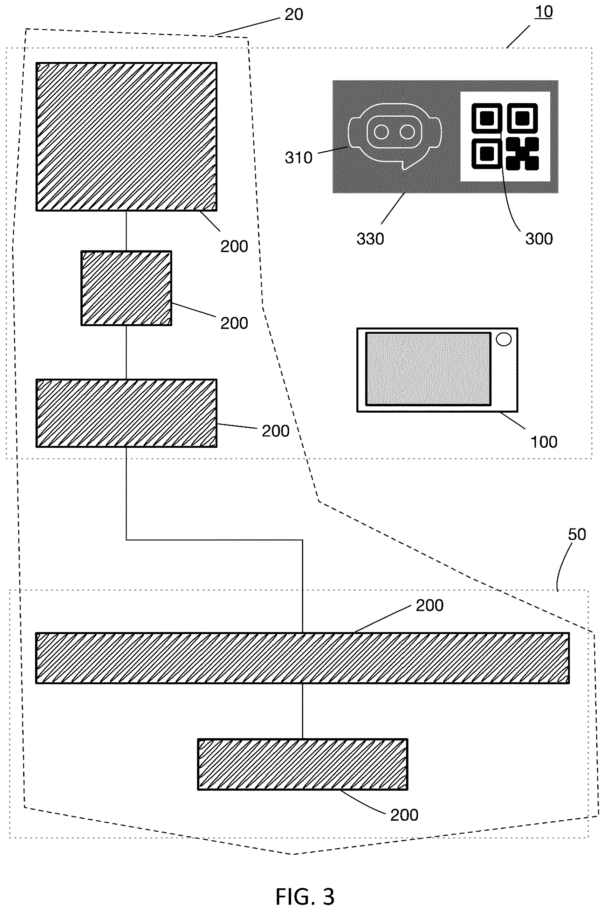

FIG. 3 illustrates an embodiment of a wall plate 330 with marker 300, here again e.g. QR code, for an exemplary video system 20, in accordance with embodiments of the invention. In addition to the marker 300, the wall plate 330 also has a logo 310 provided thereon, which is again not limiting for the invention. The video system 20 comprises a plurality of electronic devices 200 being (wired or wirelessly) connected with each other. Some of the electronic devices 200 are located in a video room where the wall plate 330 is provided. The user, having trouble with the system and carrying a mobile device 100, comprising the app for technical support, is typically present in the video room 10. Amongst the electronic devices 200 in the video room, there may be, for example, a video screen, a video decoder and a local network switch. The video screen is for instance provided onto a wall of the video room, whereas the video decoder and local network switch are e.g. put on a table in the video room. During use of the arrangement in accordance with embodiments of the present invention, the user may have one or more of the electronic devices 200 making up the video system 20 in the camera view of his mobile device 100. The video system 20 illustrated in FIG. 3 also comprises electronic devices 200 outside the video room 10, at an external location 50, and being located e.g. in a server room of an IT department, possibly in the same building or perhaps in a building different from where the video room is located. The electronic devices 200 in the server room 50 are for example a global network switch and a video encoder.

Use of the arrangement in accordance with embodiments of the present invention starts with scanning, with the camera of the mobile device 100, the marker 300 on the wall plate 330, to identify the system 20, and transmitting an identification signal corresponding to the marker 300 to a remote storage, e.g. cloud server 40, to retrieve data therefrom. After having identified the system 20 determined by the electronic devices 200, the cloud server 40 will submit back to the processor 130 of the mobile device, data related to the characteristics of the system 20. As a result, the mobile device 100 can now generate and display, via the app, an augmented reality (AR) and/or mixed reality (MR) interface corresponding to the system 20 (and its characteristics). Such AR/MR interface is generated for the electronic devices 200 in the system and is visible or is being displayed for each of the electronic devices 200 along with corresponding information thereof or related thereto, in particular at the location of these electronic devices 200 within the camera view of the mobile device. The corresponding information may comprise specifications, technical data (retrieved from the memory, e.g. cloud server 40), status and/or health data of (one of) the electronic devices 200 (retrieved from (one of) the electronic devices 200). The layout of the AR/MR interface can be adaptable (in the app, including e.g. changing settings of the app), in particular the corresponding information being displayed can be moved around on the display 120 of the mobile device 100.

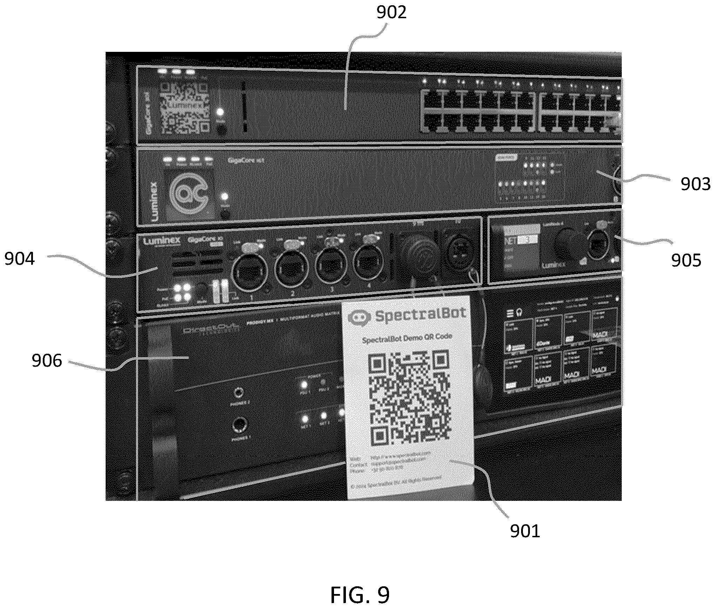

As yet discussed in FIG. 1 and FIG. 2 respectively, the marker may be provided, either directly on a rack, or else onto a blanking plate e.g. provided on the rack. In addition, FIG. 3 shows that a marker (here together with logo) can also be provided on a wall plate. Alternatively, as illustrated in FIG. 9, a separate card 901 or token can be provided onto which the marker, here in the form of a QR code, is depicted. By means of example here, in addition to the QR code, the card also shows the name of the provider (here SpectralBot), the link to the website and contact details (here email address and phone number). The card 901 is placed in front of a rack comprising a stack of electronic devices 902, 903, 904, 905, 906. In particular, by means of example, these devices are a Luminex Gigacore 30i network switch 902, a Luminex Gigacore 16t network switch 903, a Luminex Gigacore 10 network switch 904 + a Luminex LumiNode 4 ethernet / DMX switch 905, and a Directout Prodigy.mx audio matrix switcher 906.

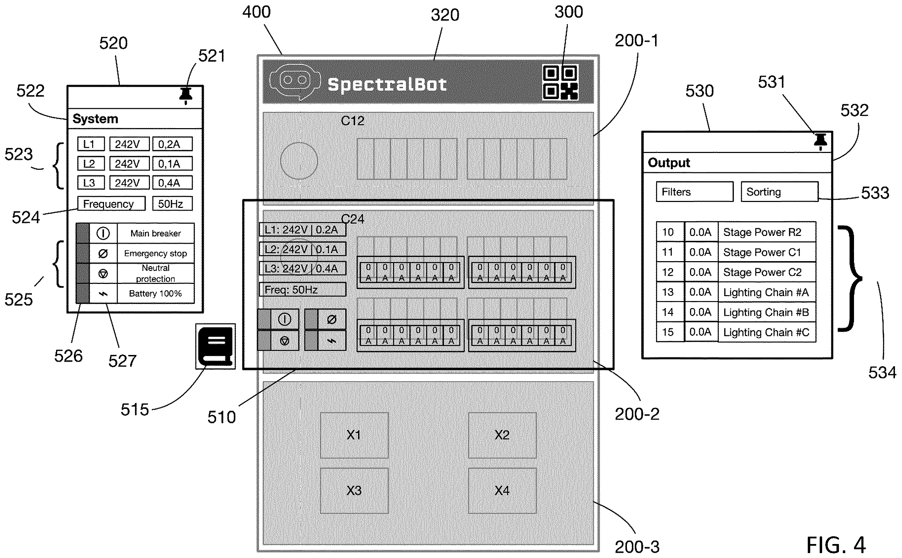

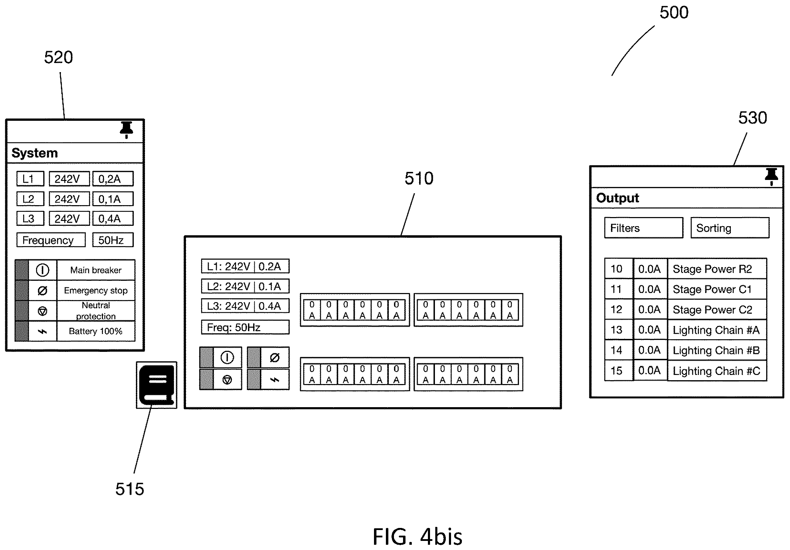

FIG. 4 illustrates an embodiment of a blanking plate 320 for a system comprising three electronic devices 200-1, 200-2, 200-3 and showing AR interface 510, 515, 520, 530 for one of the electronic devices 200-2, in accordance with embodiments of the invention. In fact, this figure or image could be interpreted as (part of) a screenshot taken from the mobile device onto which the user is running the technical support app, and hence showing camera view of the mobile device overlaid with the AR interface, in accordance with embodiments of the invention. The AR interface 500 corresponding to the electronic device 200-2 is depicted again and clearly indicated as a whole, while excluding (i.e. having removed) the image of the devices from the camera view, in FIG. 4bis. The blanking plate 320 has a marker 300, e.g. QR code, and is provided onto a rack 400. The electronic devices 200-1, 200-2, 200-3 are mounted onto the rack 400, positioned one above the other. The electronic device 200-1 (also labeled as C12) is a power distribution unit having 12 channels, each connected to a circuit breaker, whereas the electronic device 200-2 (also labeled as C24) is a power distribution unit having 24 channels, again each connected to a circuit breaker. The electronic device 200-3 is a mains power distribution unit having four outputs X1, X2, X3, X4. The AR interface for the electronic device 200-2 as shown in FIG. 4, comprises three main blocks 510, 520, 530 and a button 515, in the example illustrated situated left from block 510. The block 510 (the overlay) is visible from the moment the device 200-2 is in camera view, when the technical support app is running, and hence the AR interface is active. Blocks 520, 530 and button 515, providing supplementary information, will all pop up on the screen of the mobile device whenever the electronic device 200-2 (or overlay block 510) is selected or tapped on in the camera view of the mobile device. Amongst the main blocks, two blocks 520, 530 (i.e. the ones having a pin 521, 531 in top right corner) are movable, i.e. can be moved around on the display of the mobile device, and can potentially be pinned at any suitable location; and one block 510 (i.e. the overlaying one) is fixed i.e. it cannot be moved manually but appears on top of the image of the electronic device 200-2, as being the fixed overlay of the accompanying electronic device (here 200-2). The two movable blocks 520, 530, respectively left and right from the 19" rack 400, are also referred to as peripheral windows, whereas the fixed block 510 shown onto the electronic device 200-2 in the rack 400 is also referred to as overlay window. The button 515 can be selected or tapped on in case further information or documentation, e.g. via access to manual, is wanted. By means of example, referring to the embodiment shown in FIG. 4, the peripheral windows 520, 530 are now further explained. Peripheral window 520, being movable on the display of the mobile device onto which the AR is visualized, has a pin 521 in its upper right corner which can be selected or tapped on for fixing the location of the peripheral window 520, for example after it has been moved. The peripheral window 520 is labeled in field 522 as "System" for indicating that this window 520 is showing global (system) information regarding the electronic device 200-2. In field 523, incoming current and voltage of the 3-phase mains power is given, whereas there below field 524 is indicating the net frequency. Further, in field 525, status information of different parts or components of the electronic device 200-2 is given, amongst which e.g. on/off main breaker, on/off emergency stop, on/off neutral protection and battery capacity. The on/off status of the main breaker is for example indicated by means of a different color (green/red) ribbon 526 in front of the corresponding (e.g. power or battery) icon 527. Peripheral window 530, for similar reasons as peripheral window 520, has a pin 531 in its upper right corner which can be selected or tapped on. The peripheral window 530 is labeled in field 532 as "Output" for indicating that this window 530 is showing output information regarding the electronic device 200-2. In particular, as shown in field 534, output information (e.g. current, name of the channel) is given on the channels and/or connected circuit breakers of the electronic device 200-2. In field 533, the layout for given channels and/or connected circuit breakers in field 534, can be adapted by filtering or sorting selection. In FIG. 4bis, the entire AR interface 500 visualization corresponding to the electronic device 200-2 is depicted again, without device(s) in the background, having the peripheral windows 520, 530 and the overlay window 510, as well as the information button 515 herewith indicated.

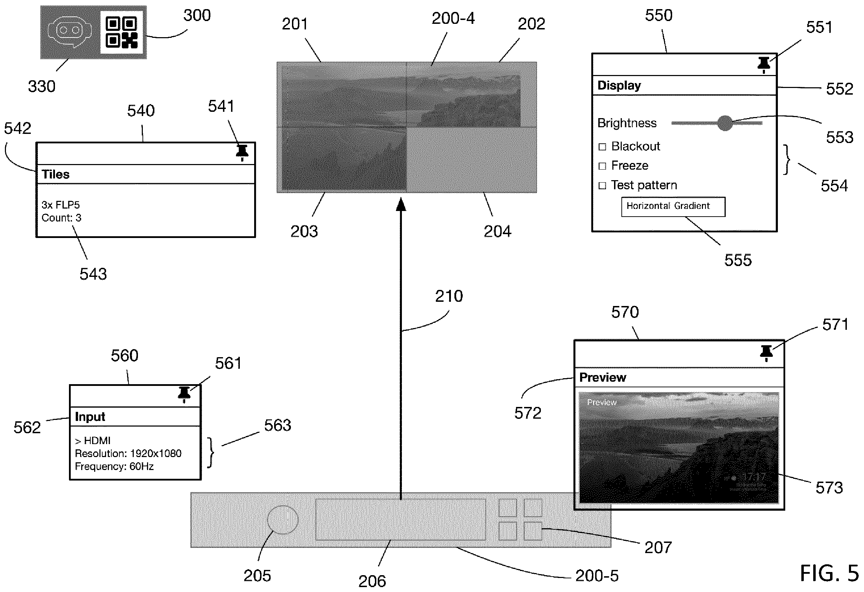

FIG. 5 illustrates an embodiment of a wall plate 330 for a system comprising two electronic devices 200-4, 200-5, now showing AR/MR interface for both electronic devices respectively, in accordance with embodiments of the invention. In fact, this figure or image could be interpreted as (part of) a screenshot taken by means of the mobile device onto which the user is running the technical support app, and hence showing camera view of the mobile device overlaid with the AR/MR interface, in accordance with embodiments of the invention. The wall plate 330 has a marker 300, e.g. QR code, and is provided in e.g. a LED wall room. The electronic devices 200-4, 200-5 are placed in the LED wall room. The electronic device 200-4 is a LED wall display, provided on a wall of the room, comprising four LED tiles 201, 202, 203, 204, whereas the electronic device 200-5 is a LED processor, provided e.g. on a table in the room, comprising a rotary button 205, LCD screen 206 and a plurality of push buttons 207. The AR/MR interface depicted comprises four blocks 540, 550, 560, 570 for the electronic devices 200-4, 200-5 respectively. In this particular embodiment, only movable blocks, also referred to as peripheral windows are given. The peripheral windows 540, 550 correspond to the electronic device 200-4 or LED wall display, depicted left and right therefrom, whereas the peripheral windows 560, 570 correspond to the electronic device 200-5 or LED processor, again depicted left and right therefrom. An arrow 210 is drawn, for showing that the LED processor 200-5 is connected with the LED wall display 200-4. Whereas all peripheral windows 540, 550, 560, 570 being movable on the display of the mobile device onto which the AR/MR is visualized, they all have a respective pin 541, 551, 561, 571 in their upper right corner which can be selected or tapped on for fixing the location of each of the peripheral windows 540, 550, 560, 570, for example after one of them has been moved. By means of example with embodiment shown, the peripheral windows 540, 550, 560, 570 are now further explained. First, the peripheral windows 540, 550 of LED wall display are further explained. The peripheral window 540 is labeled in field 542 as "Tiles" for indicating that this window 540 is showing LED tile information regarding the LED wall display or electronic device 200-4. In field 543, is indicated "Count: 3" which refers to the fact that only three of the four tiles 201, 202, 203, 204 are active, which is clearly visible in the representation of the LED wall display 200-4 itself, wherein tile 204 is black, hence not displaying (part of) an image and thus not being in "on" status. The peripheral window 550 is labeled in field 552 as "Display" for indicating that this window 550 is showing (overall) display information regarding the LED wall display or electronic device 200-4. With further fields 553, 554, 555, not only information is given, but moreover, parameters (e.g. brightness, blackout, freeze, test pattern) can be set or chosen for the LED wall display. In other words, this clearly shows that peripheral window 550 is an MR interface window (i.e. the user can interact), whereas the other peripheral window 540 is merely an AR interface window (i.e. only information is displayed). Next, the peripheral windows 560, 570 of the LED processor are further explained. The peripheral window 560 is labeled in field 562 as "Input" for indicating that this window 560 is showing (general) input information regarding the LED processor or electronic device 200-5. In field 563, the input is defined as HDMI image having a certain (here set/fixed) resolution and frequency. The peripheral window 570 is labeled in field 572 as "Preview" for indicating that this window 570 is showing preview image information regarding the LED processor or electronic device 200-5. This information can also be interpreted as a kind of input information, however, now not general (such as resolution specs) but rather related to the content or image that is received as input in the LED processor. In field 573 this is further elaborated by means of depicting a so-called "Confidence image" showing that there is something (i.e. an image) to see.

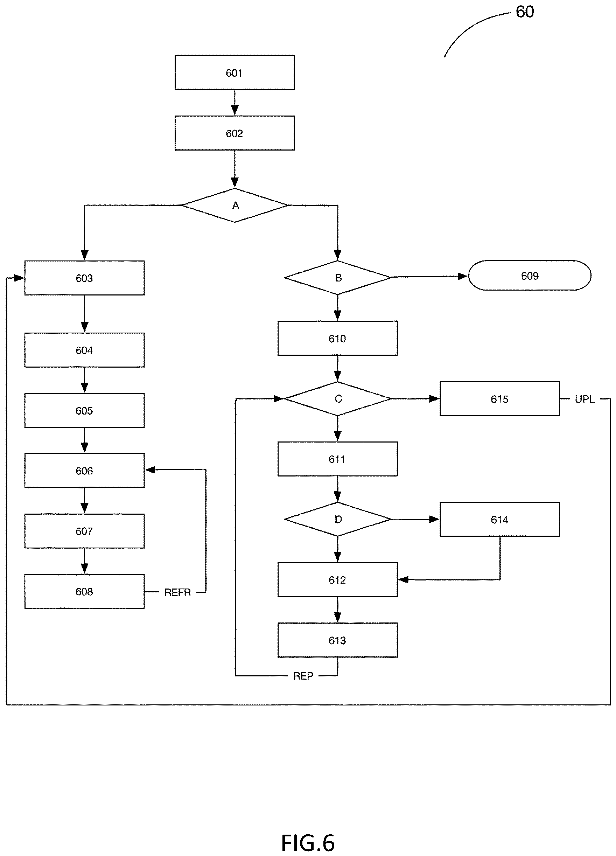

FIG. 6 illustrates a flowchart embodiment of a method 60 for providing technical support to a user, experiencing trouble with electronic devices coupled to form a system, wherein support or assistance is given by means of an app installed on a mobile device, in accordance with embodiments of the invention. The method 60 comprises different steps for using the app. A wireless network is provided, a.o. for connecting the mobile device to the system. The mobile device comprises a camera, a display and a processor, and is enabled to wirelessly connect (to the cloud and/or other devices). In a first step 601 the app is started or opened, followed by a second step 602 wherein the user is asked to scan a marker or tag provided in the environment where the user is located. Next, a question A is raised in the app to check whether a system associated with the marker is already known. If so, steps 603 till 608 can follow. If not, the user is asked by question B to create a system (not existing yet) based on this marker. In case the user agrees, step 610 will follow, otherwise, an abrupt end or stop 609 follows.

Returning back to steps 603 till 608, the situation is that the system associated with the marker is known. Data relating to the system can be loaded from memory, as indicated by step 603, for instance preferably from the cloud server but in case internet connection fails, it could also be loaded from local cache memory of the mobile device. Next, in step 604, the mobile device will connect (via wireless network provided) with the electronic devices determining the system, followed by step 605, wherein the AR/MR interface (template) is loaded in the app. During step 606, the health status or other (status) information of the electronic devices is fetched, as being retrieved from the electronic devices themselves. In step 607, the AR/MR interface is generated with the electronic device status and information included, whereas in step 608, the electronic device status and information is being displayed by the app, at least for those electronic devices within the camera view of the mobile device. As the status in particular is frequently (i.e. on a regular basis) being refreshed, an arrow REFR is provided back to step 606.

Consider now the situation wherein a system has to be created, and hence step 610, for detecting the location of the marker (not yet known), follows from question B. This location detection can be performed by means of the camera of the mobile device (being at a certain position during this detection, and hence used as reference position for determining the marker location). Whenever the marker location is detected, the question C is raised to ask if an electronic device has to be associated with the marker. If yes, in step 611, the app will look for making connection (via wireless network provided) with this electronic device, and if it succeeds in doing so after having posed question D if the device got connected, the location of the electronic device is also detected, in step 612, by means of the camera of the mobile device (while using position of the mobile device and/or marker location as reference or anchor). In case it is not possible to make a connection with the electronic device automatically, a manual connection is made in step 614, again followed by the detection of the location of this electronic device in step 612. The device is then added to the system in step 613. Whereas further electronic devices can be added, an arrow REP is provided back to question C for repeating steps 611 till 613. In case no further electronic devices should be added, step 615 will follow question C for storing the system configuration determined by the electronic devices added thereto. An arrow UPL is provided from step 615 towards step 603 for (enabling) uploading the system that has been configured.

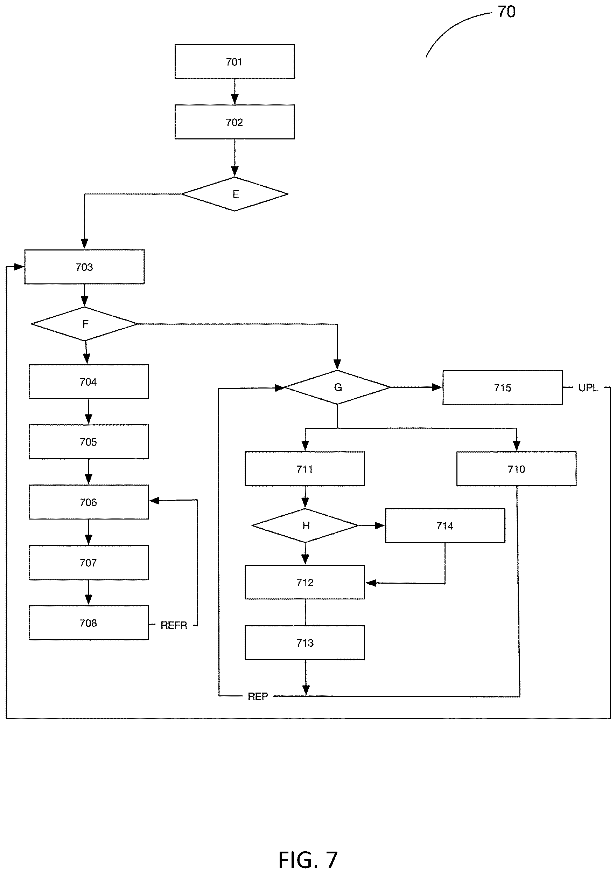

FIG. 7 illustrates another flowchart embodiment of the method 70 for providing technical support, in accordance with embodiments of the invention. In fact now, as compared to FIG. 6, an alternative process and sequence of steps is given in case the marker is known. The situation wherein the system associated with the marker is yet unknown, is not shown, nor described here again, but is to be understood as similar to what has been explained earlier with the description of FIG. 6. The flowchart embodiment is again related to different steps to be followed when using an app on a mobile device, for providing technical support to a user, experiencing trouble with electronic devices in a system. A wireless network is provided, for connection between the mobile device, the electronic devices and a data storage storing characteristics of the system. The mobile device comprises a camera, a display and a processor, and is enabled to wirelessly connect (to the cloud and/or other devices). In a first step 701 the app is started or opened, followed by a second step 702 wherein the user is asked to scan a marker or tag provided in the environment where the user is located. Next, a question E is raised in the app to check whether the system associated with the marker is already known. If so, step 703 and subsequent ones will follow. In what follows, only the situation is considered when the system associated with the marker is known. The marker is associated with the known system made up of electronic devices and characteristics thereof can be loaded from memory, as indicated by step 703, e.g. preferably from the cloud server but in case internet connection fails, it could also be loaded from local cache memory of the mobile device. Next, a question F can be raised to check (with the user) whether the system has to be edited, i.e. if one or more devices should be removed from or added to the system. In case no, step 704 follows, during which the mobile device will connect (via wireless network provided) with the electronic devices determining the system, followed by step 705, wherein the AR/MR interface (template) is loaded in the app. During step 706, the health status or other (status) information of the electronic devices is fetched, as being retrieved from the electronic devices themselves. In step 707, the AR/MR interface is generated with the electronic device status and information included, whereas in step 708, the electronic device status and information is being displayed by the app, at least for those electronic devices within the camera view of the mobile device. As the status of the electronic devices in particular is frequently being refreshed, an arrow REFR is provided back to step 706. In case the system needs to be edited, the process continues with question G, asking if an electronic device has to be added or removed. In case of adding, in step 711 the app will look for making connection (via wireless network provided) with the electronic device to be added, and if it succeeds in doing so after having posed question H if the device got connected, the location of the electronic device is also detected, in step 712, by means of the camera of the mobile device (while using position of the mobile device and/or marker location as reference or anchor). Alternatively, it is also possible (in another embodiment) that the location of the electronic device is not (automatically) detected but determined or defined by the user him/herself. Consider for example the case of a wall plate (with marker) in a room, wherein the electronic devices are not (necessarily) nicely arranged in a rack, but can be spread and placed anywhere within that room (or even outside the room, at an external location). The possibility can now be given to the user to merely place or add a spatial anchor in the (3D space) camera view of the mobile device, of where the electronic device is located. This can be the actual location of the electronic device, but it can also be an arbitrary location, chosen by the user (e.g. when the electronic device is outside reach of the camera view, but the user still wants a local AR/MR presentation of the electronic device on the camera display). In case it is not possible to make a connection with the electronic device automatically, a manual connection may be made in step 714, again followed by the detection of the location of this electronic device in step 712. The device is then added to the system in step 713. In case of removal, the electronic device is removed from the system in step 710. Both steps 713 and 710 are connected to an arrow REP leading back to question G for repeating the steps for adding or removing electronic devices to or from the system. In case no further electronic devices should be added or removed, step 715 will follow question G for storing the system configuration determined by the electronic devices added thereto and/or removed therefrom. An arrow UPL is provided from step 715 towards step 703 for (enabling) uploading the system that has been configured.

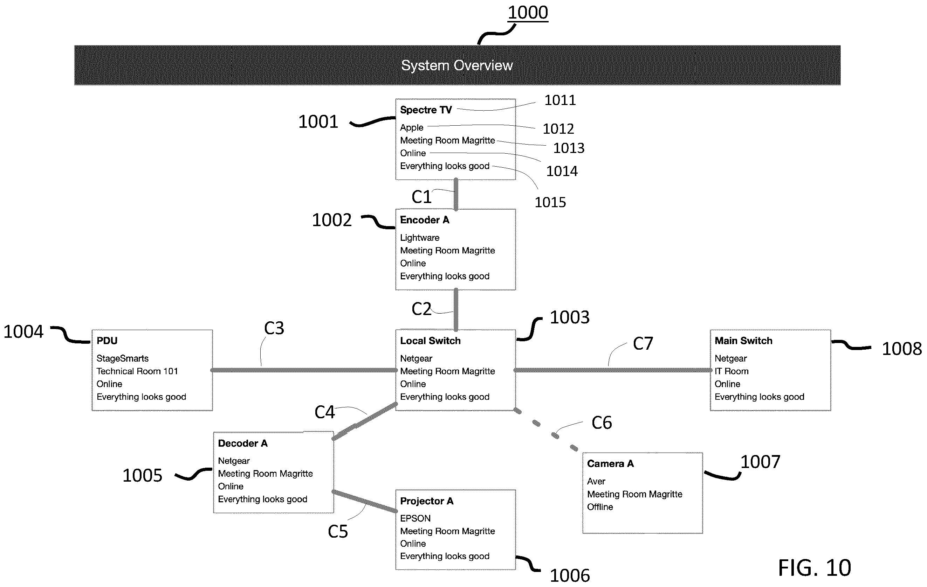

According to an embodiment, the main user interface (while using the AR/MR app) of an identified system is the system overview, or system topology, showing all the devices in the system, and their interconnections. This view represents all the status information about the devices and their interconnections, in one glance, as for instance depicted in FIG. 10, illustrating an embodiment of a system overview 1000, as may be viewed by the technical support app. The system overview 1000 comprises an overview of the multiple devices 1001, 1002, 1003, 1004, 1005, 1006, 1007, 1008 comprised in a system for which the overview is given. Herewith the devices are not only mentioned, but also their interconnection or interrelation is shown by means of the connecting lines C1, C2, C3, C4, C5, C6, C7. The full connecting lines C1, C2, C3, C4, C5, C7, C8 indicate that the devices on either side of the line are connected. The dashed connecting line C6 means that the connection between the devices on either end of the line, is broken. In other words, one or both of the devices are not connected to the system. The connecting lines may have different colors (not shown here) in order to indicate different connection status between the devices. For example, a certain color (e.g. yellow) may indicate that the devices are connected, but that there is no signal transmission between them. Furthermore, detailed information about the devices is depicted amongst which the (commercial) name or brand of the device, the manufacturer or supplier, the place or room wherein the device is located, the online or offline status, and the health status of the device. For example, for the device 1001 the name of the device is Spectre TV 1011, which is a brand of the company Apple 1012 being the manufacturer. The device 1001 is located in the Meeting Room Magritte 1013, and is in Online 1014 status. As health status of the device 1001 is mentioned that Everything looks good 1015.

According to an embodiment, the marker- independent of its form - is used as a primary, physical anchor for the AR/MR interface of the solution provided. All AR/MR windows and views that are generated in the solution, are placed in the AR/MR-space, in reference to the marker.

To build the AR/MR environment of the system, the user places so-called AR anchors in the room using the app on an AR/MR tool such as a mobile device. AR anchors are like virtual post-it notes that a user can place in the AR/MR space, using the camera of the mobile device. Every time an AR anchor is placed, the technical support app will record the position of that anchor in the AR space (XYZ coordinate), relative to the absolute position of the marker, i.e. the primary AR anchor. These relative positions are stored in the cloud. The (absolute) position of the marker (or primary AR anchor) itself, is not stored. As a result, when a user puts an AR anchor for a specific device in the AR space, this location is stored relative to the marker's position in the AR space. Hence, the marker must be locked to a physical location. If it moves, the whole AR space will move as well, creating offsets of the AR views. Consequently, the whole AR environment - with its AR anchors - is built around the absolute AR position of the marker. On the other hand, the positions of the AR anchors are stored, relative to the absolute position of the marker.

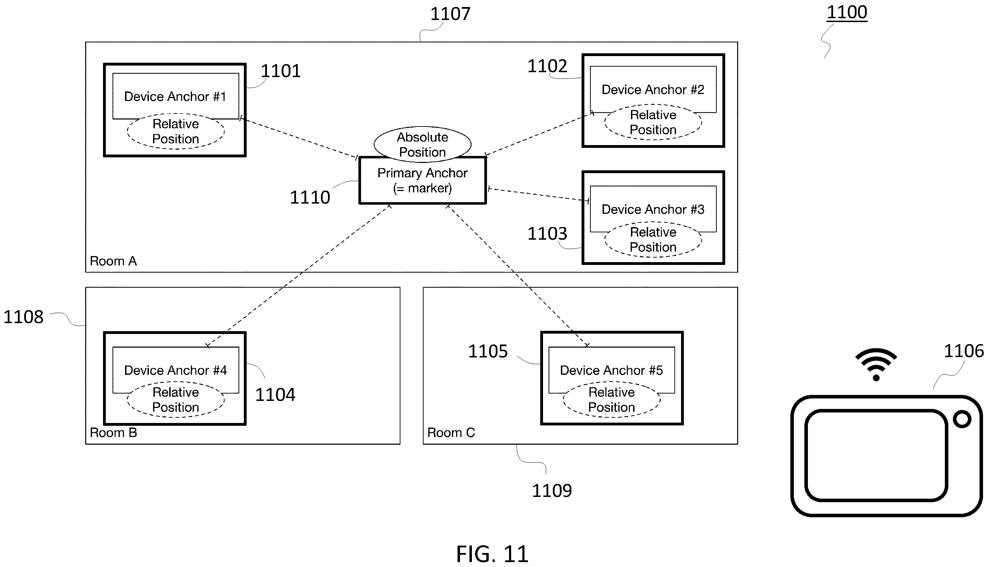

FIG. 11 illustrates an embodiment of an arrangement 1100 comprising a mobile device 1106 and a plurality of electronic devices 1101, 1102, 1103, 1104, 1105 within an environment, in accordance with the invention. The environment comprises multiple rooms, in this case three rooms 1107, 1108, 1109, such that the devices are more spread over the environment. In particular, here, three devices 1101, 1102, 1103 are in a first room 1107, whereas a fourth device 1104 is located in a second room 1108, and a fifth device 1105 is placed in a third room 1109. A marker 1110 is also placed in the first room 1107, acting as primary anchor. The primary anchor (i.e. the marker) has an absolute position. Other anchors, i.e. device anchors, are assigned to the devices and have relative positions in view of the primary anchor. In other words, all the device anchors are positioned in relation to this primary anchor. As depicted in the embodiment of FIG. 11, device anchors can be placed in other and different rooms, other than where the marker is. The device anchor assigned to the fourth device 1104 is located in the second room 1108, whereas the device anchor assigned to the fifth device 1105 is placed in the third room 1109. Dashed bounded lines are shown between each of the device anchors and the primary anchor respectively, indicating that the physical position of the device anchors is calculated relatively to the absolute position of the primary anchor. It is noted that the lines in this case are not connecting lines (as e.g. in FIG. 10), however the lines do show that a relation between each of the device anchors and the primary anchor respectively exists. It is particularly noted that there is no digital connection or communication there between.

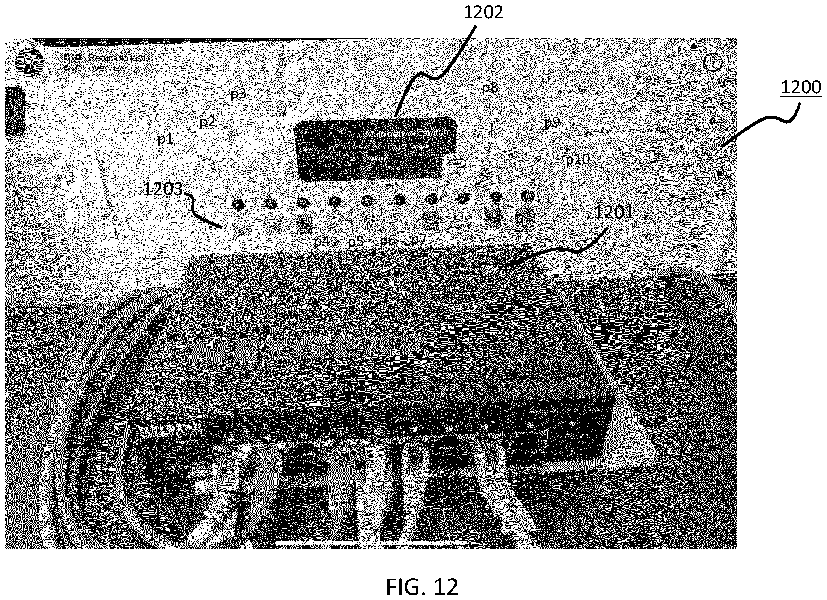

FIG. 12 illustrates a screenshot 1200 of a picture embodiment of one of the electronic devices of a system, while showing AR/MR interface for the device shown in particular, in accordance with the invention. As part of the AR/MR interface (overlaying in the picture embodiment of the device), the device anchor 1202 of corresponding device 1201 is indicated. By means of example, here, the device anchor 1202 comprises the type of device, manufacturer and location of the device. Below the device anchor 1202, a set of device ports 1203 of corresponding device 1201 are also shown, while indicating by means of color (here grayscale), if they are wire connected or not. For example, the device ports p1, p2, p4, p5, p6, p8 amongst the set 1203 are light gray indicating a connection, whereas the device ports p3, p7, p9, p10 in the set 1203 represented in dark gray have no wire connection.

Next to the system overview, and AR/MR view, a further relevant feature of the provided solution is the (remote) support feature. The main premise and purpose of the invention is to help users with their e.g. professional AV struggles: for example when a device acts up, helping the user to find and solve the problem by themselves, without the need of technical expertise. However, when the user is not able to solve the problem on-site, he/she may optionally still rely on the expertise of a technician, remotely. And this may occur in two steps:
1/ the user creates a support ticket using the app. The app will submit the ticket to the backend (including a snapshot of the current system's state), for a technician to pick it up; and
2/ if the technician is not able to figure out what's going on based on the support ticket, and the snapshot, he can call-in remotely and watch along with the user on-site. This gives the technician access to exactly see the same views as the local user, but maybe even more information, since technicians often have access to more information than regular users (see authentication and user roles).

The optional remote expert support also starts with the marker associated with the system (and hence identifying it) in that the marker helps to identify the system for the technician.

In conclusion, it is noted that the marker is a principal feature of the present invention, and is key because of:
- system access and identification: accessing a system, its devices and the installation information;
- authentication: possibly determining the user's role with the system and installation;
- licensing: the marker may be linked to a license determining which features are available in the technical support app, for the system linked to the marker; and
- AR/MR interface: acting as the primary AR anchor in absolute position, where all other device AR anchors of the system are referenced to.

The form or type of the marker can vary, as long as it's digitally readable by a computing device, such as for example a computer or mobile device like a smartphone or a tablet.

## Claims

1. An arrangement, comprising
- a system, defined by a plurality of electronic devices being operationally interconnected and determining a configuration of the system,
- a marker acting as a unique digital system identifier for identifying the system, and
- a mobile device comprising
• a camera, for scanning a marker associated with the system, said camera having a camera view,
• a display, and
• a processor, connectable to a memory storing characteristics of the system and able to retrieve characteristics of the system from the memory, and connectable to the plurality of electronic devices,
wherein the mobile device is configured for displaying an augmented and/or mixed reality (AR/MR) interface corresponding to one or more of the plurality of electronic devices of the system, along with information of the system and/or one or more of the plurality of electronic devices, based on said stored and retrieved characteristics and/or obtained from the connectable plurality of electronic devices.

2. The arrangement according to claim 1, wherein a physical position of the marker is used to localize the plurality of electronic devices of the system, herewith defining the marker as primary anchor.

3. The arrangement according to any of claim 1 or 2, wherein the marker is provided onto a rack, case, plate or wall, or the marker is provided onto a separate card or token.

4. The arrangement according to any of claim 1 to 3, wherein the marker is a QR-code, NFC or RFID tag or asset tag.

5. The arrangement according to any of claim 1 to 4, wherein the memory is either part of the mobile device or a separate device or a separate system of the arrangement, possibly connected to the cloud.

6. The arrangement according to any of claim 1 to 5, wherein at least one of the plurality of electronic devices is not located in the camera view.

7. The arrangement according to any of claim 1 to 6, wherein the system is redefined by adding one or more additional electronic devices, and/or removing one or more of the plurality of electronic devices, and/or adapting settings of one or more of the plurality of electronic devices, and herewith new characteristics of the system are defined.

8. The arrangement according to claim 7, wherein said new characteristics of the system are stored in the memory.

9. The arrangement according to any of claim 1 to 8, wherein the mobile device is configured for displaying specifications, technical data, status and/or health data of one or more of the plurality of electronic devices.

10. The arrangement according to any of claim 1 to 9, wherein the processor is adapted for triggering displaying, on the display, of the AR/MR interface for one or more of the plurality of electronic devices of the system, whenever said one or more of the plurality of electronic devices is displayed on the display of the mobile device.

11. The arrangement according to any of claim 1 to 10, wherein the layout of the AR/MR interface is adaptable, in particular corresponding information being displayed can be moved around on the display of the mobile device.

12. The arrangement according to any of claim 1 to 11, further comprising means for requesting remote support and/or assistance, possibly of an expert, wherein said means for requesting remote assistance are part of the mobile device, or of another computing device at least connectable to the mobile device, such that the another computing device is able to share a camera view of the mobile device including the AR/MR interface applied thereon, possibly with the expert.

13. Use of an arrangement according to any of claim 1 to 12, for providing support, in particular for troubleshooting and/or problem solving operations, related to one or more of the plurality of electronic devices, and/or the interconnection or interoperability between the plurality of electronic devices.

14. A method for support, in particular for troubleshooting operations, comprising
- providing a mobile device comprising a camera, a display and a processor, and connected to a memory storing characteristics of a system defined by a plurality of electronic devices and to the plurality of electronic devices, being operationally interconnected and determining a configuration of the system,
- providing a marker associated with the system for which a troubleshooting process is required, wherein said marker is acting as a unique digital system identifier for identifying the system,
- scanning the marker with the camera of the mobile device,
- based on a signal generated by scanning the marker retrieving characteristics of the system and/or one or more of the plurality of electronic devices from the memory,
- based on said retrieved information, generating an augmented and/or mixed reality (AR/MR) interface corresponding to the system, and
- when directing the camera of the mobile device towards one or more of the plurality of electronic devices of the system, displaying on the display of the mobile device an image of the one or more of the plurality of electronic device of the system, and part of the AR/MR interface corresponding to said one or more of the plurality of electronic devices.

15. The method according to claim 14, further comprising
- redefining the system by adding one or more additional electronic devices, and/or removing one or more of the plurality of electronic devices, and/or adapting settings of one or more of the plurality of electronic devices, and herewith new characteristics of the system are defined.
